(19) Europäisches Patentamt / European Patent Office / Office européen des brevets

(11) EP 4 679 466 A1

(12) EUROPEAN PATENT APPLICATION
published in accordance with Art. 153(4) EPC

(43) Date of publication:
**14.01.2026 Bulletin 2026/03**

(21) Application number: **24788475.2**

(22) Date of filing: **07.03.2024**

(51) International Patent Classification (IPC):
***H01G 9/035*** *(2006.01)* ***H01G 9/15*** *(2006.01)*
***H01G 9/145*** *(2006.01)*

(52) Cooperative Patent Classification (CPC):
**H01G 9/035; H01G 9/145; H01G 9/15**

(86) International application number:
**PCT/JP2024/008705**

(87) International publication number:
**WO 2024/214445 (17.10.2024 Gazette 2024/42)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**GE KH MA MD TN**

(30) Priority: **10.04.2023 JP 2023063721**

(71) Applicant: **Sanyo Chemical Industries, Ltd.**
**Kyoto-shi, Kyoto 605-0995 (JP)**

(72) Inventor: **UCHIHASHI, Kengo**
**Kyoto-shi, Kyoto 605-0995 (JP)**

(74) Representative: **Manitz Finsterwald**
**Patent- und Rechtsanwaltspartnerschaft mbB**
**Martin-Greif-Straße 1**
**80336 München (DE)**

# (54) ELECTROLYTE SOLUTION FOR HYBRID ELECTROLYTIC CAPACITORS AND HYBRID ELECTROLYTIC CAPACITOR

(57) The present invention relates to a hybrid electrolytic capacitor electrolyte solution containing an aromatic carboxylic acid (A) having a substituent with two or more carbon atoms, the carboxylic acid (A) having an acid dissociation constant (pKa) of 1.0 to 4.5 as determined by the following measurement method. Measurement method: At 25°C, a 0.1 mol/L methanolic potassium hydroxide solution is added dropwise to a solution consisting of 1 part by weight of the carboxylic acid (A) and 99 parts by weight of methanol to obtain a titration curve having inflection points; among the inflection points, an inflection point at which an amount of titrant added is the smallest is defined as an equivalence point; and a pH at half the amount of titrant added at the equivalence point is defined as the acid dissociation constant (pKa) of the carboxylic acid (A).

EP 4 679 466 A1

## Description

TECHNICAL FIELD

The present invention relates to hybrid electrolytic capacitor electrolyte solutions and hybrid electrolytic capacitors including capacitor elements impregnated with the hybrid electrolytic capacitor electrolyte solutions.

BACKGROUND ART

Hybrid electrolytic capacitors are widely used in a variety of electrical products and electronic products, and are used for a wide range of purposes, including charge storage, noise elimination, and phase adjustment. In recent years, the use of hybrid electrolytic capacitors in vehicles has increased, prompting various improvements to meet the growing demand for higher withstand voltages.
For example, Patent Literature 1 discloses a technique for increasing the withstand voltage of a capacitor by using an aliphatic carboxylic acid or a composite compound of an inorganic acid and an organic acid as an anion in the electrolyte solution.
Patent Literature 2 discloses a technique for improving the equivalent series resistance (ESR) of a capacitor for high voltage applications by using an aliphatic carboxylic acid ammonium salt in the electrolyte solution.
However, although the electrolytic capacitors described in Patent Literatures 1 and 2 have higher withstand voltages, the withstand voltages are insufficient, and the ESR characteristics in a high-temperature environment are also insufficient.

CITATION LIST

- Patent Literature

Patent Literature 1: JP 2015-165550 A
Patent Literature 2: JP 2017-38010 A

SUMMARY OF INVENTION

- Technical Problem

The present invention aims to provide a hybrid electrolytic capacitor electrolyte solution with a high withstand voltage. The hybrid electrolytic capacitor electrolyte solution, when used in a hybrid electrolytic capacitor, is capable of increasing the capacitance and suppressing an increase in ESR of the hybrid electrolytic capacitor even in a high-temperature environment.

- Solution to Problem

The present inventor conducted extensive studies to solve the above problems and arrived at the present invention.
Specifically, the present invention relates to a hybrid electrolytic capacitor electrolyte solution containing an aromatic carboxylic acid (A) having a substituent with two or more carbon atoms,
the carboxylic acid (A) having an acid dissociation constant (pKa) of 1.0 to 4.5 as determined by the following measurement method.
Measurement method: At 25°C, a 0.1 mol/L methanolic potassium hydroxide solution is added dropwise to a solution consisting of 1 part by weight of the carboxylic acid (A) and 99 parts by weight of methanol to obtain a titration curve having inflection points; among the inflection points, an inflection point at which an amount of titrant added is the smallest is defined as an equivalence point; and a pH at half the amount of titrant added at the equivalence point is defined as the acid dissociation constant (pKa) of the carboxylic acid (A).
The present invention also relates to a hybrid electrolytic capacitor including a capacitor element, the capacitor element including an anode foil, a dielectric layer on a surface of the anode foil, and a solid electrolyte (C) layer in contact with the dielectric layer, the capacitor element being impregnated with the hybrid electrolytic capacitor electrolyte solution of the present invention, the solid electrolyte (C) layer containing a conductive polymer.

- Advantageous Effects of Invention

The hybrid electrolytic capacitor electrolyte solution of the present invention has a high withstand voltage and is thus suitable for use in a hybrid electrolytic capacitor.

In the hybrid electrolytic capacitor of the present invention including the hybrid electrolytic capacitor electrolyte solution of the present invention, the capacitance is high and an increase in ESR is suppressed in a high temperature environment.

DESCRIPTION OF EMBODIMENTS

The hybrid electrolytic capacitor electrolyte solution of the present invention contains an aromatic carboxylic acid (A) having a substituent with two or more carbon atoms, the carboxylic acid (A) having an acid dissociation constant (pKa) of 1.0 to 4.5 as determined by the following measurement method.

Measurement method: At 25°C, a 0.1 mol/L methanolic potassium hydroxide solution is added dropwise to a solution consisting of 1 part by weight of the carboxylic acid (A) and 99 parts by weight of methanol to obtain a titration curve having inflection points; among the inflection points, an inflection point at which an amount of titrant added is the smallest is defined as an equivalence point; and a pH at half the amount of titrant added at the equivalence point is defined as the acid dissociation constant (pKa) of the carboxylic acid (A).

Non-limiting examples of the aromatic carboxylic acid (A) having a substituent with two or more carbon atoms (hereinafter also simply referred to as carboxylic acid (A)) include a compound having an aromatic ring, a carboxyl group, and a substituent with two or more carbon atoms. From the viewpoint of a withstand voltage, the carboxylic acid (A) preferably has at least one bond selected from the group consisting of an ester bond, an amide bond, an imide bond, an ether bond, a urethane bond, and a urea bond, more preferably an ester bond.

Examples of the carboxylic acid (A) having an ester bond include an aromatic carboxylic acid having an aromatic ester group. Herein, the aromatic ester group refers to a group in which a carbon atom constituting an aromatic ring is directly bonded to a carbon atom of an ester bond.

The aromatic carboxylic acid having an aromatic ester group may be an ester compound of an aromatic carboxylic acid (a1) and an alcohol (a2).

Examples of the aromatic carboxylic acid (a1) include aromatic dicarboxylic acids, aromatic tricarboxylic acids, aromatic tetracarboxylic acids, aromatic pentacarboxylic acids, and aromatic hexacarboxylic acids.

Examples of the aromatic dicarboxylic acids include phthalic acid (including phthalic anhydride), isophthalic acid, and terephthalic acid.

Examples of the aromatic tricarboxylic acids include trimellitic acid (including trimellitic anhydride), 1,2,3-benzenetricarboxylic acid (including anhydride), and 1,3,5-tricarboxylic acid.

Examples of the aromatic tetracarboxylic acids include pyromellitic acid (including pyromellitic anhydride).

Examples of the aromatic pentacarboxylic acids include benzenepentacarboxylic acid (including anhydride).

Examples of the aromatic hexacarboxylic acids include mellitic acid (including mellitic anhydride).

Of these aromatic carboxylic acids (a1), from the viewpoints of suppressing an increase in ESR in a high-temperature environment and the solubility in solvents, which are described later, phthalic acid (including phthalic anhydride), terephthalic acid, trimellitic acid (including trimellitic anhydride), pyromellitic acid (including pyromellitic anhydride), and mellitic acid (including mellitic anhydride) are preferred, with phthalic acid (including phthalic anhydride), trimellitic acid (including trimellitic anhydride), and pyromellitic acid (including pyromellitic anhydride) being more preferred and phthalic acid (including phthalic anhydride) being still more preferred.

Each of these aromatic carboxylic acids (a1) may be used alone or two or more of these may be used in combination.

Examples of the alcohol (a2) include a monoalcohol, a diol, a triol, and a polyhydric alcohol having four or more hydroxy groups.

Examples of the monoalcohol include ethanol, propanol, butanol, pentanol, hexanol, heptanol, octanol, nonanol, decanol, dodecanol, and tetradecanol. The monoalcohol is preferably a C2-C10 monoalcohol. Specifically, the monoalcohol preferably includes at least one selected from the group consisting of ethanol, propanol, butanol, pentanol, hexanol, heptanol, octanol, nonanol, and decanol.

The monoalcohol may optionally have a substituent. Examples of the monoalcohol having a substituent include those prepared by replacing at least one hydrogen atom in the monoalcohols by a substituent. Examples of the substituent include halogen atoms (such as fluorine, chlorine, and bromine atoms) and C1-C4 alkoxy groups.

Examples of the diol include a C2-C10 alkylene glycol and a polyalkylene glycol having a C2-C6 oxyalkylene unit.

Examples of the C2-C10 alkylene glycol include ethylene glycol, propylene glycol, 1,4-butanediol, 1,10-butanediol, pentanediol, hexanediol, heptanediol, octanediol, nonanediol, and decanediol.

Examples of the polyalkylene glycol having a C2-C6 oxyalkylene unit include polyethylene glycol, polypropylene

glycol, polybutylene glycol, and polytetramethylene glycol.

The number of oxyalkylene units in the polyalkylene glycol is, for example, two or more, but not limited thereto. The number average molecular weight of the polyalkylene glycol is preferably, but not limited to, 2000 or less, more preferably 1000 or less, from the viewpoints of withstand voltage and solubility.

Examples of the triol include glycerol and trimethylolpropane.

Examples of the polyhydric alcohol having four or more hydroxyl groups include pentaerythritol, dipentaerythritol, diglycerol, triglycerol, sorbitol, and sucrose.

From the viewpoints of withstand voltage and the solubility in solvents, which are described later, the alcohol (a2) is preferably a diol, more preferably at least one selected from the group consisting of ethylene glycol, polyethylene glycol, polypropylene glycol, polybutylene glycol, and polytetramethylene glycol, still more preferably at least one selected from the group consisting of ethylene glycol, polyethylene glycol, and polypropylene glycol.

Each of these alcohols (a2) may be used alone or two or more of these may be used in combination.

The aromatic carboxylic acid (a1) and the alcohol (a2) may be reacted by any known methods under any known conditions. The aromatic carboxylic acid (a1) and the alcohol (a2) may be subjected to a condensation reaction, and ethyl acetate, butyl acetate, acetone, methyl ethyl ketone, toluene, or the like may be added to the resulting reaction liquid for the purpose of precipitating solids.

A preferred form of the aromatic carboxylic acid having an aromatic ester group is an aromatic carboxylic acid having one aromatic ester group (aromatic carboxylic acid monoester). A preferred form of the aromatic carboxylic acid monoester is a carboxylic acid represented by the following formula (1):

[Chem. 1]

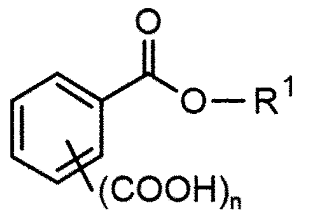

(1)

wherein $R^1$ represents a residue obtained by removing a hydroxy group from an optionally substituted C2-C10 monoalcohol, a residue obtained by removing one hydroxy group from a C2-C10 alkylene glycol, a residue obtained by removing one hydroxy group from a polyalkylene glycol having a C2-C6 oxyalkylene unit, or a residue obtained by removing one hydroxy group from glycerol.

Examples of the C2-C10 monoalcohol include ethanol, propanol, butanol, pentanol, hexanol, heptanol, octanol, nonanol, and decanol. The C2-C10 monoalcohol may optionally have a substituent. Examples of the C2-C10 monoalcohol having a substituent include those in which at least one hydrogen atom of any of the C2-C10 monoalcohols are replaced by a substituent.

Examples of the substituent include halogen atoms (such as fluorine, chlorine, and bromine atoms) and C1-C4 alkoxy groups.

Examples of the C2-C10 alkylene glycol include ethylene glycol, propylene glycol, 1,4-butanediol, 1,10-butanediol, pentanediol, hexanediol, heptanediol, octanediol, nonanediol, and decanediol.

Examples of the polyalkylene glycol having a C2-C6 oxyalkylene unit include polyethylene glycol, polypropylene glycol, polybutylene glycol, and polytetramethylene glycol. The number of oxyalkylene units in the polyalkylene glycol is, for example, two or more, but not limited thereto. The number average molecular weight of the polyalkylene glycol is preferably, but not limited to, 2000 or less, more preferably 1000 or less, from the viewpoints of withstand voltage and solubility.

Although n is not limited as long as it is an integer of 1 to 5, it is preferably an integer of 1 to 3, more preferably 1 or 2, from the viewpoint of withstand voltage.

Specific examples of the aromatic carboxylic acid having an aromatic ester group include phthalic acid decanol monoester, phthalic acid ethylene glycol monoester, phthalic acid polyethylene glycol monoester, phthalic acid polypropylene glycol monoester, phthalic acid glycerol monoester, terephthalic acid decanol monoester, terephthalic acid ethylene glycol monoester, terephthalic acid polyethylene glycol monoester, terephthalic acid polypropylene glycol monoester, terephthalic acid glycerol monoester, trimellitic acid decanol monoester, trimellitic acid ethylene glycol monoester, trimellitic acid polyethylene glycol monoester, trimellitic acid polypropylene glycol monoester, trimellitic acid glycerol monoester, pyromellitic acid decanol monoester, pyromellitic acid ethylene glycol monoester, pyromellitic acid polyethylene glycol monoester, pyromellitic acid polypropylene glycol monoester, pyromellitic acid glycerol monoester, mellitic acid decanol monoester, mellitic acid ethylene glycol monoester, mellitic acid polyethylene glycol monoester,

mellitic acid polypropylene glycol monoester, and mellitic acid glycerol monoester.

To suppress an increase in ESR in a high-temperature environment and to also ensure the withstand voltage, the carboxylic acid (A) is preferably an aromatic carboxylic acid having an aromatic ester group, more preferably an aromatic carboxylic acid having one aromatic ester group (aromatic carboxylic acid monoester), still more preferably a carboxylic acid represented by the formula (1).

Each of the carboxylic acids (A) may be used alone or two or more of these may be used in combination.

The acid dissociation constant (pKa) of the carboxylic acid (A) determined by the above measurement method is not limited as long as it is 1.0 to 4.5. It is preferably 1.5 to 4.0, more preferably 2.0 to 4.0. If the pKa of the carboxylic acid (A) is less than 1.0, dissolution of the anodic oxide film of a hybrid electrolytic capacitor proceeds, and the oxide film cannot be reformed, so that the initial spark voltage (withstand voltage) may decrease. On the other hand, if the pKa is more than 4.5, the effect of suppressing oxidative degradation of the conductive polymer is insufficient, and the capacitance and ESR may deteriorate in a high-temperature environment.

The pKa of the carboxylic acid (A) is described below. The pKa is expressed by the following formula:

$$pKa = -\log_{10}(([(A)\ anion][proton])/[(A)])$$

[(A) anion]: concentration (mol/L) of anion of the carboxylic acid (A)
[proton]: concentration (mol/L) of proton
[(A)]: concentration (mol/L) of carboxylic acid (A)

In addition, based on the relationship between pKa and pH (hydrogen ion concentration), the pH and pKa in a solution prepared by adding 0.5 molar equivalents of a strong base to the acid are equal to each other.

Herein, the pKa of the carboxylic acid (A) can be measured, for example, using an automatic titrator under the following conditions.

Apparatus (example): Automatic titrator COM-A19 (HIRANUMA Co., Ltd.)
Electrode (example): Glass electrode GE-101B (HIRANUMA Co., Ltd.)
Measurement temperature: 25°C

At 25°C, a 0.1 mol/L methanolic potassium hydroxide solution is added dropwise to a solution consisting of 1 part by weight of the carboxylic acid (A) and 99 parts by weight of methanol to obtain a titration curve having inflection points; among the inflection points, an inflection point at which an amount of titrant added is the smallest is defined as an equivalence point; and a pH at half the amount of titrant added at the equivalence point is defined as the acid dissociation constant (pKa) of the carboxylic acid (A).

The pKa of the carboxylic acid (A) can be adjusted, for example, by using a substituent having two or more carbon atoms. For example, the pKa can be lowered by introducing an electron-withdrawing group as the substituent having two or more carbon atoms, whereas the pKa can be increased by introducing an electron-donating group as the substituent having two or more carbon atoms.

The amount of the carboxylic acid (A) in the hybrid electrolytic capacitor electrolyte solution of the present invention is preferably, but not limited to, 0.05 to 40% by weight, more preferably 1 to 30% by weight, still more preferably 1 to 20% by weight, from the viewpoints of withstand voltage and suppressing an increase in ESR in a high-temperature environment.

The amount of the carboxylic acid (A) in the hybrid electrolytic capacitor electrolyte solution of the present invention is preferably, but not limited to, 50 to 100% by weight, more preferably 60 to 100% by weight, still more preferably 70 to 100% by weight, based on the total weight of acid components (the total weight of the carboxylic acid (A) and an acid component (A') different from the carboxylic acid (A), which is described below) in the solution, from the viewpoints of withstand voltage and suppressing an increase in ESR in a high-temperature environment.

The hybrid electrolytic capacitor electrolyte solution of the present invention preferably further contains an alcohol (B) from the viewpoint of suppressing an increase in ESR in a high-temperature environment.

Examples of the alcohol (B) include ethylene glycol, propylene glycol, 1,4-butanediol, 1,10-butanediol, pentanediol, hexanediol, heptanediol, octanediol, nonanediol, n-decanol, 1,10-decanediol, glycerol, and a polyalkylene glycol having a C2-C6 oxyalkylene unit.

Examples of the polyalkylene glycol having a C2-C6 oxyalkylene unit include polyethylene glycol, polypropylene glycol, polybutylene glycol, and polytetramethylene glycol.

The number of oxyalkylene units in the polyalkylene glycol is, for example, two or more, but not limited thereto. The number average molecular weight of the polyalkylene glycol is preferably, but not limited to, 2000 or less, more preferably 1000 or less, from the viewpoint of withstand voltage.

From the viewpoint of withstand voltage, the alcohol (B) is preferably at least one selected from the group consisting of ethylene glycol, polyethylene glycol, polypropylene glycol, polybutylene glycol, and polytetramethylene glycol, more preferably at least one selected from the group consisting of ethylene glycol, polyethylene glycol, and polypropylene glycol.

Each of the alcohols (B) may be used alone or two or more of these may be used in combination.

When the hybrid electrolytic capacitor electrolyte solution of the present invention contains the alcohol (B), the amount of the alcohol (B) in the hybrid electrolytic capacitor electrolyte solution of the present invention is preferably, but not limited to, 40 to 99% by weight, more preferably 60 to 90% by weight, still more preferably 75 to 90% by weight, from the viewpoints of withstand voltage and suppressing an increase in ESR in a high-temperature environment.

When the hybrid electrolytic capacitor electrolyte solution of the present invention contains the alcohol (B), the weight ratio ((B)/(A)) of the alcohol (B) to the carboxylic acid (A) in the hybrid electrolytic capacitor electrolyte solution of the present invention is preferably, but not limited to, 1 to 500, more preferably 1 to 200, still more preferably 2 to 20, from the viewpoint of withstand voltage.

The hybrid electrolytic capacitor electrolyte solution of the present invention may contain an acid component (A') different from the carboxylic acid (A).

Examples of the acid component (A') different from the carboxylic acid (A) include an aliphatic carboxylic acid having an aliphatic ester group and other acid components. Herein, the aliphatic ester group refers to a group in which a carbon atom constituting a non-aromatic hydrocarbon group is directly bonded to a carbon atom of an ester bond. The non-aromatic hydrocarbon group may be acyclic (linear or branched) or cyclic.

The aliphatic carboxylic acid having an aliphatic ester group may be an ester compound of an aliphatic carboxylic acid (a'1) and an alcohol (a2). The alcohol (a2) may be the same as the above-described alcohol (a2) used for the aromatic carboxylic acid having an aromatic ester group.

Examples of the aliphatic carboxylic acid (a'1) include aliphatic dicarboxylic acids, aliphatic tricarboxylic acids, and aliphatic tetracarboxylic acids.

Examples of the aliphatic dicarboxylic acids include malonic acid, succinic acid (including succinic anhydride), malic acid, fumaric acid, adipic acid, and sebacic acid.

Examples of the aliphatic tricarboxylic acids include citric acid, isocitric acid, and propane-1,2,3-tricarboxylic acid.

Examples of the aliphatic tetracarboxylic acids include cyclobutanetetracarboxylic acid (including anhydride) and 1,2,3,4-butanetetracarboxylic acid (including anhydride).

The aliphatic carboxylic acid (a'1) and the alcohol (a2) may be reacted by any known methods under any known conditions. The aliphatic carboxylic acid (a' 1) and the alcohol (a2) may be subjected to a condensation reaction, and ethyl acetate, butyl acetate, acetone, methyl ethyl ketone, toluene, or the like may be added to the resulting reaction liquid for the purpose of precipitating solids.

Examples of the other acid components include aromatic carboxylic acids such as benzoic acid, phthalic acid, isophthalic acid, terephthalic acid, 1,2-naphthalenedicarboxylic acid, 1,4-naphthalenedicarboxylic acid, 1,5-naphthalenedicarboxylic acid, 1,8-naphthalenedicarboxylic acid, 2,3-naphthalenedicarboxylic acid, 2,6-naphthalenedicarboxylic acid, acetylsalicylic acid, trimellitic acid, and pyromellitic acid; aliphatic carboxylic acids such as adipic acid, sebacic acid, azelaic acid, 1,6-decanedicarboxylic acid, 2-furancarboxylic acid, 3-furancarboxylic acid, and 2,5-furandicarboxylic acid; and acids such as phosphoric acid compounds (phosphoric acid, diphosphorous acid, and phosphoric acid esters) and boric acid compounds (boric acid, borate esters, and borodisalicylic acid). Examples of the other acid components include an ester compound of a monocarboxylic acid having a sulfo group and an alcohol (a2). Examples of the monocarboxylic acid having a sulfo group include m-sulfobenzoic acid and o-sulfobenzoic acid. The alcohol (a2) may be the same as the above-described alcohol (a2) used for the aromatic carboxylic acid having an aromatic ester group.

From the viewpoint of suppressing an increase in ESR in a high-temperature environment, the acid component (A') different from the carboxylic acid (A) is preferably at least one selected from the group consisting of benzoic acid, phthalic acid, and 2,5-furandicarboxylic acid, more preferably phthalic acid.

From the viewpoint of increasing the withstand voltage, the acid component (A') different from the carboxylic acid (A) preferably includes at least one selected from the group consisting of the aliphatic carboxylic acid having an aliphatic ester group, an aromatic carboxylic acid, and boric acid, more preferably an aromatic carboxylic acid and boric acid, still more preferably boric acid.

Each of the acid components (A') different from the carboxylic acid (A) may be used alone or two or more of these may be used in combination.

When the hybrid electrolytic capacitor electrolyte solution of the present invention contains an acid component (A') different from the carboxylic acid (A), the amount of the acid component (A') different from the carboxylic acid (A) in the hybrid electrolytic capacitor electrolyte solution of the present invention is preferably, but not limited to, 10% by weight or less, more preferably 5% by weight or less, still more preferably 1% by weight or less, from the viewpoint of suppressing an increase in ESR in a high-temperature environment.

In the hybrid electrolytic capacitor electrolyte solution of the present invention, each of the carboxylic acid (A) and the acid component (A') may be contained in the form of an acid, or may be ionized and contained as an anion.

Examples of a counter cation of each anion include ammonium, primary ammonium, secondary ammonium, tertiary ammonium, and amidinium. The ammonium, primary ammonium, secondary ammonium, and tertiary ammonium are ammonium produced from ammonia, ammonium produced from a primary amine, ammonium produced from a secondary amine, and ammonium produced from a tertiary amine, respectively.

Examples of these amines include methylamine, dimethylamine, trimethylamine, ethylamine, diethylamine, triethylamine, ethylenediamine, N,N-diisopropylethylamine, tetramethylethylenediamine, hexamethylenediamine, spermidine, spermine, amantadine, aniline, phenethylamine, toluidine, pyrrolidine, piperidine, piperazine, morpholine, ethylmorpholine, imidazole, pyridine, pyridazine, pyrimidine, pyrazine, 4-dimethylaminopyridine, and trimethanolamine.

Examples of the amidinium include 1,2,3,4-tetramethylimidazolinium, 1,3-dimethylimidazolium, 1,3-diisopropylimidazolium, 1,3-dibutylimidazolium, 1-methyl-3-propylimidazolium, 1-ethyl-3-methylimidazolium, 1-ethyl-2,3-dimethylimidazolium, 1-butyl-3-methylimidazolium, and 1-benzyl-3-methylimidazolium.

Each of the counter cations of the anion may be used alone or two or more of these may be used in combination.

From the viewpoint of suppressing an increase in ESR, the counter cation of the anion is preferably at least one selected from the group consisting of ammonium, primary ammonium, and tertiary ammonium, more preferably tertiary ammonium.

When the hybrid electrolytic capacitor electrolyte solution of the present invention contains a counter cation of the anion in addition to the carboxylic acid (A), the amount of the substance that generates the counter cation of the anion (ammonia, a primary amine, a secondary amine, and a tertiary amine) is preferably, but not limited to, 0.1 to 20% by weight, more preferably 1.0 to 10% by weight, still more preferably 2.0 to 5.0% by weight, from the viewpoints of withstand voltage and suppressing an increase in ESR in a high-temperature environment.

The hybrid electrolytic capacitor electrolyte solution of the present invention may further contain a solvent different from the alcohol (B).

Examples of the solvent include water, alcohol solvents different from the alcohol (B) (methyl alcohol, ethyl alcohol, propyl alcohol, butyl alcohol, ethylene glycol monobutyl ether, etc.), amide solvents (N-methylformamide, N-ethylformamide, N,N-dimethylformamide, etc.), lactone solvents ($\alpha$-acetyl-$\gamma$-butyrolactone, $\beta$-butyrolactone, $\gamma$-butyrolactone, $\gamma$-valerolactone, $\delta$-valerolactone, etc.), nitrile solvents (acetonitrile, propionitrile, butyronitrile, acrylonitrile, methacrylonitrile, benzonitrile, etc.), sulfoxide solvents (dimethyl sulfoxide, methyl ethyl sulfoxide, diethyl sulfoxide), and sulfone solvents (sulfolane, ethyl methyl sulfone, etc.).

From the viewpoint of suppressing an increase in ESR, the solvent is preferably a lactone solvent or a sulfone solvent, more preferably a sulfone solvent, still more preferably sulfolane.

Each of the solvents may be used alone or two or more of these may be used in combination.

When the hybrid electrolytic capacitor electrolyte solution of the present invention contains water as a solvent, the amount of water in the hybrid electrolytic capacitor electrolyte solution of the present invention is preferably, but not limited to, 0.05 to 40% by weight, more preferably 0.5 to 3.0% by weight, from the viewpoint of withstand voltage.

The pH of the hybrid electrolytic capacitor electrolyte solution of the present invention at 25°C is preferably, but not limited to, 4 to 6, more preferably 4 to 5.5, still more preferably 4 to 5, from the viewpoints of suppressing an increase in ESR and withstand voltage.

Herein, the pH of the hybrid electrolytic capacitor electrolyte solution of the present invention at 25°C is measured directly with a pH meter.

The hybrid electrolytic capacitor of the present invention includes a capacitor element. The capacitor element includes an anode foil, a dielectric layer on a surface of the anode foil, and a solid electrolyte (C) layer in contact with the dielectric layer. The capacitor element is impregnated with the hybrid electrolytic capacitor electrolyte solution of the present invention. The solid electrolyte (C) layer contains a conductive polymer.

In an embodiment, the hybrid electrolytic capacitor of the present invention may include a pair of lead wires and an exterior body in addition to the capacitor element. One end of each of the lead wires is connected to the capacitor element. The exterior body encloses the capacitor element, with the other ends of the lead wires being led out of the exterior body.

The exterior body includes a cylindrical case, a drawn portion provided on the outer circumferential surface of the case, and a sealing member having through holes for inserting the lead wires. The case contains the capacitor element impregnated with the hybrid electrolytic capacitor electrolyte solution of the present invention. The lead wires, each having one end connected to the capacitor element, are inserted into the respective through holes of the sealing member and are compressed by the drawn portion for sealing.

The anode foil having a dielectric layer on its surface is formed, for example, by etching an aluminum foil to form a roughened surface, and then forming a dielectric anodic oxide film on the surface(chemical treatment).

The capacitor element includes an anode foil, a dielectric layer formed on the surface of the anode foil, and a solid electrolyte (C) layer in contact with the dielectric layer. The solid electrolyte (C) layer contains a conductive polymer. The capacitor element typically further includes a cathode foil and a separator in addition to the anode foil and the solid

electrolyte (C) layer. In an embodiment, the capacitor element has a structure formed by winding a laminate in which an anode foil, a dielectric layer formed on the surface of the anode foil, a solid electrolyte (C) layer containing a conductive polymer, a separator, and a cathode foil are sequentially laminated. The separator may be impregnated with a solid electrolyte (C) containing a conductive polymer. The solid electrolyte (C) layer containing a conductive polymer may be formed by any known method. Examples of the method include a method including impregnating the solid electrolyte (C) with a conductive polymer solution, followed by drying and a method including electrolytically polymerizing a conductive polymer to form the solid electrolyte (C).

In the hybrid electrolytic capacitor of the present invention, the capacitor element is impregnated with the hybrid electrolytic capacitor electrolyte solution of the present invention. Specifically, the hybrid electrolytic capacitor electrolyte solution of the present invention is impregnated into gaps in the solid electrolyte (C) layer formed in the capacitor element.

The shape and size of the hybrid electrolytic capacitor of the present invention are not limited. The hybrid electrolytic capacitor of the present invention may have any structure and may be, for example, a wound-type hybrid electrolytic capacitor, that is, a hybrid electrolytic capacitor having a structure in which an anode foil (aluminum oxide foil, etc.) having a dielectric layer (aluminum oxide layer, etc.) on its surface and a cathode foil (aluminum foil, etc.) are wound with a separator interposed therebetween.

The hybrid electrolytic capacitor of the present invention may be produced by any known method. For example, a separator (craft paper, manila paper, etc.) is impregnated with the hybrid electrolytic capacitor electrolyte solution of the present invention as an operating electrolyte solution and placed between an anode foil and a cathode foil, they are wound and housed in a cylindrical aluminum case with a bottom, and the opening of the aluminum case is sealed with a sealing rubber (butyl rubber, silicone rubber, etc.).

In the hybrid electrolytic capacitor of the present invention, the solid electrolyte (C) layer contains a conductive polymer.

Examples of the conductive polymer include (co)polymers containing thiophene, 3,4-ethylenedioxythiophene, alkylated ethylenedioxythiophene, alkoxylated ethylenedioxythiophene, pyrrole, or aniline as a constituent monomer. A (co)polymer containing 3,4-ethylenedioxythiophene as a constituent monomer is preferably used, and poly(3,4-ethylenedioxythiophene) doped with polystyrene sulfonic acid is more preferably used.

Each of the conductive polymers may be used alone or two or more of these may be used in combination.

The hybrid electrolytic capacitor of the present invention including a capacitor element impregnated with the hybrid electrolytic capacitor electrolyte solution of the present invention is excellent not only in reducing the initial ESR but also in suppressing an increase in ESR at high temperatures. The mechanism by which an increase in ESR at high temperatures is suppressed is not yet clear, but is presumed as follows.

The performance degradation (reduction in ESR retention rate, etc.) of conventional hybrid electrolytic capacitor electrolyte solutions is believed to be caused by oxidative degradation and dedoping of the conductive polymer constituting the solid electrolyte. Since the hybrid electrolytic capacitor electrolyte solution of the present invention contains an aromatic carboxylic acid (A) having a substituent with two or more carbon atoms, and the carboxylic acid (A) has an acid dissociation constant (pKa) of 1.0 to 4.5 as determined by the above-mentioned measurement method, the pH at 25°C is maintained in the range of 4 to 6. This presumably leads to suppression of oxidative degradation and dedoping of the conductive polymer contained in the solid electrolyte (C) layer.

<Others>

Herein, the following items are disclosed.

<1> A hybrid electrolytic capacitor electrolyte solution containing an aromatic carboxylic acid (A) having a substituent with two or more carbon atoms, the carboxylic acid (A) having an acid dissociation constant (pKa) of 1.0 to 4.5 as determined by the following measurement method:
Measurement method

at 25°C, a 0.1 mol/L methanolic potassium hydroxide solution is added dropwise to a solution consisting of 1 part by weight of the carboxylic acid (A) and 99 parts by weight of methanol to obtain a titration curve having inflection points; among the inflection points, an inflection point at which an amount of titrant added is the smallest is defined as an equivalence point; and a pH at half the amount of titrant added at the equivalence point is defined as the acid dissociation constant (pKa) of the carboxylic acid (A).

<2> The hybrid electrolytic capacitor electrolyte solution according to <1>, wherein the carboxylic acid (A) has at least one bond selected from the group consisting of an ester bond, an amide bond, an imide bond, an ether bond, a urethane bond, and a urea bond.

<3> The hybrid electrolytic capacitor electrolyte solution according to <1> or <2>, wherein the carboxylic acid (A) has

an ester bond.

<4> The hybrid electrolytic capacitor electrolyte solution according to any one of <1> to <3>, wherein the carboxylic acid (A) is contained in an amount of 50 to 100% by weight based on a total weight of acid components in the solution.

<5> The hybrid electrolytic capacitor electrolyte solution according to any one of <1> to <4>, further containing an alcohol (B), wherein a weight ratio ((B)/(A)) of the alcohol (B) to the carboxylic acid (A) is 1 to 200.

<6> The hybrid electrolytic capacitor electrolyte solution according to any one of <1> to <5>, wherein the carboxylic acid (A) contains a carboxylic acid represented by the following formula (1):

[Chem. 2]

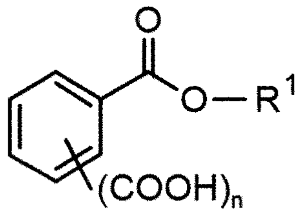

(1)

wherein $R^1$ represents a residue obtained by removing a hydroxy group from an optionally substituted C2-C10 monoalcohol, a residue obtained by removing one hydroxy group from a C2-C10 alkylene glycol, a residue obtained by removing one hydroxy group from a polyalkylene glycol having a C2-C6 oxyalkylene unit, or a residue obtained by removing one hydroxy group from glycerol; and n represents an integer of 1 to 5.

<7> A hybrid electrolytic capacitor including a capacitor element, the capacitor element including an anode foil, a dielectric layer on a surface of the anode foil, and a solid electrolyte (C) layer in contact with the dielectric layer, the capacitor element being impregnated with the hybrid electrolytic capacitor electrolyte solution according to any one of <1> to <6>, the solid electrolyte (C) layer containing a conductive polymer.

EXAMPLES

The present invention is described in more detail below with reference to examples, but the present invention is not limited to these examples.

<Method for measuring acid dissociation constant (pKa) of carboxylic acid (A)>

At 25°C, 99 parts by weight of methanol was added to 1 part by weight of a carboxylic acid (A), and the contents were shaken and mixed until the carboxylic acid (A) was completely dissolved. A 0.1 mol/L methanolic potassium hydroxide solution was added dropwise to the resulting methanol solution of the carboxylic acid (A) to obtain a titration curve having inflection points, and among the inflection points, an inflection point at which the amount of titrant added was the smallest was defined as an equivalence point. The pH at half the amount of titrant added at the equivalence point on the obtained titration curve was read, and the pH was defined as the acid dissociation constant (pKa) of the carboxylic acid (A).

The pKa of the acid component (A') was also measured in the same manner as the pKa of the carboxylic acid (A).

$$pKa = -\log_{10}(([(A)\ anion][proton])/[(A)])$$

[(A) anion]: [(A) anion]: concentration (mol/L) of anion of the carboxylic acid (A)

[proton]: concentration (mol/L) of proton

[(A)]: concentration (mol/L) of carboxylic acid (A)

<Measurement conditions>

Apparatus: automatic titrator COM-A19 (HIRANUMA Co., Ltd.)

Electrode: glass electrode GE-101B (HIRANUMA Co., Ltd.)

Measurement temperature: 25°C

<Production Example 1>

A flask was charged with 21.0 parts by weight (1 molar equivalent) of phthalic anhydride, and 79.0 parts by weight (9.0 molar equivalents) of ethylene glycol was added dropwise thereto to carry out a condensation reaction (esterification reaction), thereby obtaining a reaction solution. To the resulting reaction solution was added 50.0 parts by weight of ethyl acetate, and the mixture was cooled to -5°C to precipitate a solid. The precipitated solid was separated by filtration and then dried to obtain 29.8 parts by weight of phthalic acid ethylene glycol monoester (A1). The phthalic acid ethylene glycol monoester (A1) had an acid dissociation constant (pKa) of 3.8 as measured by the above-mentioned measurement method.

<Production Example 2>

A flask was charged with 14.7 parts by weight (1 molar equivalent) of terephthalic acid and 85.3 parts by weight (15.5 molar equivalents) of ethylene glycol, the contents were heated to 140°C and maintained for three hours for a condensation reaction (esterification reaction). Thereafter, unreacted ethylene glycol was removed under reduced pressure (0.5 kPa) at 120°C to obtain 20 parts by weight of a mixture (A2) of terephthalic acid ethylene glycol monoester and terephthalic acid ethylene glycol diester. The mixture (A2) of terephthalic acid ethylene glycol monoester and terephthalic acid ethylene glycol diester had an acid dissociation constant (pKa) of 4.1 as measured by the above-mentioned measurement method.

<Production Example 3>

A reaction was performed as in Production Example 1, except that the phthalic anhydride was changed to 22.2 parts by weight (1 molar equivalent) of trimellitic anhydride and the amount of ethylene glycol was changed to 77.8 parts by weight (11.8 molar equivalents), thereby obtaining 28.8 parts by weight of trimellitic acid ethylene glycol monoester (A3). The trimellitic acid ethylene glycol monoester (A3) had an acid dissociation constant (pKa) of 3.4 as measured by the above-mentioned measurement method.

<Production Example 4>

A reaction was performed as in Production Example 1, except that the phthalic anhydride was changed to 15.9 parts by weight (1 molar equivalent) of trimellitic anhydride and the ethylene glycol was changed to 84.1 parts by weight (5.6 molar equivalents) of PEG200 (polyethylene glycol, number average molecular weight 200, available from Sanyo Chemical Industries, Ltd.), thereby obtaining 28.8 parts by weight of trimellitic acid polyethylene glycol monoester (A4). The trimellitic acid polyethylene glycol monoester (A4) had an acid dissociation constant (pKa) of 3.6 as measured by the above-mentioned measurement method.

<Production Example 5>

A reaction was performed as in Production Example 1, except that the phthalic anhydride was changed to 26.1 parts by weight (1 molar equivalent) of pyromellitic anhydride and the amount of ethylene glycol was changed to 73.9 parts by weight (11.6 molar equivalents), thereby obtaining 32.4 parts by weight of pyromellitic acid ethylene glycol monoester (A5). The pyromellitic acid ethylene glycol monoester (A5) had an acid dissociation constant (pKa) of 2.6 as measured by the above-mentioned measurement method.

<Production Example 6>

A reaction was performed as in Production Example 1, except that the phthalic anhydride was changed to 11.6 parts by weight (1 molar equivalent) of pyromellitic anhydride and the ethylene glycol was changed to 88.4 parts by weight (9.7 molar equivalents) of PEG200 (polyethylene glycol, number average molecular weight 200, available from Sanyo Chemical Industries, Ltd.), thereby obtaining 20.6 parts by weight of pyromellitic acid polyethylene glycol monoester (A6). The pyromellitic acid polyethylene glycol monoester (A6) had an acid dissociation constant (pKa) of 2.9 as measured by the above-mentioned measurement method.

<Production Example 7>

A reaction was performed as in Production Example 1, except that the phthalic anhydride was changed to 24.5 parts by weight (1 molar equivalent) of mellitic anhydride and the amount of ethylene glycol was changed to 75.5 parts by

weight (14.3 molar equivalents), thereby obtaining 29.8 parts by weight of mellitic acid ethylene glycol monoester (A7). The mellitic acid ethylene glycol monoester (A7) had an acid dissociation constant (pKa) of 1.7 as measured by the above-mentioned measurement method.

<Production Example 8>

A reaction was performed as in Production Example 1, except that the amount of phthalic anhydride was changed to 5.1 parts by weight (1 molar equivalent) and the ethylene glycol was changed to 94.9 parts by weight (7.0 molar equivalents) of Sannix PP-400 (polypropylene glycol, number average molecular weight 400, available from Sanyo Chemical Industries, Ltd.), thereby obtaining 18.7 parts by weight of phthalic acid polypropylene glycol monoester (A8). The phthalic acid polypropylene glycol monoester (A8) had an acid dissociation constant (pKa) of 3.9 as measured by the above-mentioned measurement method.

<Production Example 9>

A reaction was performed as in Production Example 1, except that the amount of phthalic anhydride was changed to 2.5 parts by weight (1 molar equivalent) and the ethylene glycol was changed to 97.5 parts by weight (5.8 molar equivalents) of PEG1000 (polyethylene glycol, number average molecular weight 1000, available from Sanyo Chemical Industries, Ltd.), thereby obtaining 19.2 parts by weight of phthalic acid polyethylene glycol monoester (A9). The phthalic acid polyethylene glycol monoester (A9) had an acid dissociation constant (pKa) of 4.2 as measured by the above-mentioned measurement method.

<Production Example 10>

A reaction was performed as in Production Example 1, except that the amount of phthalic anhydride was changed to 13.2 parts by weight (1 molar equivalent) and the ethylene glycol was changed to 86.8 parts by weight (6.2 molar equivalents) of n-decanol, thereby obtaining 27.2 parts by weight of phthalic acid n-decanol monoester (A10). The phthalic acid n-decanol monoester (A10) had an acid dissociation constant (pKa) of 3.9 as measured by the above-mentioned measurement method.

<Production Example 11>

A reaction was performed as in Production Example 1, except that the amount of phthalic anhydride was changed to 12.9 parts by weight (1 molar equivalent) and the ethylene glycol was changed to 87.1 parts by weight (5.7 molar equivalents) of 1,10-decanediol, thereby obtaining 28.1 parts by weight of phthalic acid 1,10-decanediol monoester (A11). The phthalic acid 1,10-decanediol monoester (A11) had an acid dissociation constant (pKa) of 4.0 as measured by the above-mentioned measurement method.

<Production Example 12>

A reaction was performed as in Production Example 1, except that the amount of phthalic anhydride was changed to 13.1 parts by weight (1 molar equivalent) and the ethylene glycol was changed to 86.9 parts by weight (10.6 molar equivalents) of glycerol, thereby obtaining 21.3 parts by weight of phthalic acid glycerol monoester (A12). The phthalic acid glycerol monoester (A12) had an acid dissociation constant (pKa) of 3.7 as measured by the above-mentioned measurement method.

<Production Example 13>

The same procedure was performed as in Production Example 1, except that the phthalic anhydride was changed to 18.4 parts by weight (1 molar equivalent) of succinic anhydride and the amount of ethylene glycol was changed to 81.6 parts by weight (7.2 molar equivalents), thereby obtaining 29.8 parts by weight of succinic acid ethylene glycol monoester (A'1). The succinic acid ethylene glycol monoester (A'1) had an acid dissociation constant (pKa) of 6.5 as measured by the above-mentioned measurement method.

<Production Example 14>

The same procedure was performed as in Production Example 1, except that the phthalic anhydride was changed to 20.7 parts by weight (1 molar equivalent) of m-sulfobenzoic acid and the amount of ethylene glycol was

changed to 79.3 parts by weight (12.5 molar equivalents), thereby obtaining 27.0 parts by weight of m-sulfobenzoic acid ethylene glycol monoester (A'2). The m-sulfobenzoic acid ethylene glycol monoester (A'2) had an acid dissociation constant (pKa) of 0.9 as measured by the above-mentioned measurement method.

Table 1 shows the compounds used in the respective production examples and the acid dissociation constants (pKa) of the resulting carboxylic acids (A).

[Table 1]

| | | Production Example 1 | Production Example 2 | Production Example 3 | Production Example 4 | Production Example 5 | Production Example 6 | Production Example 7 | Production Example 8 | Production Example 9 | Production Example 10 | Production Example 11 | Production Example 12 | Production Example 13 | Production Example 14 |
|---|---|---|---|---|---|---|---|---|---|---|---|---|---|---|---|
| Carboxylic acid (A) | | (A1) | (A2) | (A3) | (A4) | (A5) | (A6) | (A7) | (A8) | (A9) | (A10) | (A11) | (A12) | (A'1) | (A'2) |
| Aromatic carboxylic acid (a1) | Phthalic anhydride | 21.0 | | | | | | | 5.1 | 2.5 | 13.2 | 12.9 | 13.1 | | |
| | Terephthalic acid | | 14.7 | | | | | | | | | | | | |
| | Trimellitic anhydride | | | 22.2 | 15.9 | | | | | | | | | | |
| | Pyromellitic anhydride | | | | | 26.1 | 11.6 | | | | | | | | |
| | Mellitic anhydride | | | | | | | 24.5 | | | | | | | |
| Aliphatic carboxylic acid (a'1) | Succinic anhydride | | | | | | | | | | | | | 18.4 | |
| Monocarboxylic acid having sulfo group | m-Sulfobenzoic acid | | | | | | | | | | | | | | 20.7 |
| Alcohol (a2) | Ethylene glycol | 79.0 | 85.3 | 77.8 | | 73.9 | | 75.5 | | | | | | 81.6 | 79.3 |
| | PEG200 | | | | 84.1 | | 88.4 | | | | | | | | |
| | Polypropylene glycol | | | | | | | | 94.9 | | | | | | |
| | PEG1000 | | | | | | | | | 97.5 | | | | | |
| | n-Decanol | | | | | | | | | | 86.8 | | | | |
| | 1,10-Decanediol | | | | | | | | | | | 87.1 | | | |
| | Glycerol | | | | | | | | | | | | 86.9 | | |
| Acid dissociation constant (pKa) of carboxylic acid (A) | | 3.8 | 4.1 | 3.4 | 3.6 | 2.6 | 2.9 | 1.7 | 3.9 | 4.2 | 3.9 | 4.0 | 3.7 | 6.5 | 0.9 |

<Examples 1 to 17 and Comparative Examples 1 to 6>

<Preparation of hybrid electrolytic capacitor electrolyte solution>

The components were mixed according to the formulation (parts by weight) shown in Table 2, and carbonic acid was removed by vacuum degassing as necessary to prepare hybrid electrolytic capacitor electrolyte solutions (Y-1) to (Y-17) of the present invention (examples) and hybrid electrolytic capacitor electrolyte solutions (Y'-1) to (Y'-6) of comparative examples. Here, with respect to the hybrid electrolytic capacitor electrolyte solution (Y-2) of the present invention, carbonic acid generated by the reaction of 1,2,3,4-tetramethylimidazolinium/methyl carbonate with an acid was removed by vacuum degassing, and thus, the parts by weight excluding the carbonic acid are shown in Table 2.

[Table 2]

| Hybrid electrolytic capacitor electrolyte solution | | pKa | Example 1 | Example 2 | Example 3 | Example 4 | Example 5 | Example 6 | Example 7 | Example 8 | Example 9 | Example 10 | Example 11 | Example 12 | Example 13 | Example 14 | Example 15 | Example 16 | Example 17 | Comparative Example 1 | Comparative Example 2 | Comparative Example 3 | Comparative Example 4 | Comparative Example 5 | Comparative Example 6 |
|---|---|---|---|---|---|---|---|---|---|---|---|---|---|---|---|---|---|---|---|---|---|---|---|---|---|
| | | | (Y-1) | (Y-2) | (Y-3) | (Y-4) | (Y-5) | (Y-6) | (Y-7) | (Y-8) | (Y-9) | (Y-10) | (Y-11) | (Y-12) | (Y-13) | (Y-14) | (Y-15) | (Y-16) | (Y-17) | (Y'-1) | (Y'-2) | (Y'-3) | (Y'-4) | (Y'-5) | (Y'-6) |
| (A) | (A1) | 3.8 | 10.0 | 10.0 | | | | | | | | | | | | 5.0 | 0.5 | 35.0 | 5.0 | | | | | | |
| | (A2) | 4.1 | | | 10.0 | | | | | | | | | | | 5.0 | | | | | | | | | |
| | (A3) | 3.4 | | | | 10.0 | | | | | | | | | | | | | | | | | | | |
| | (A4) | 3.6 | | | | | 15.0 | | | | | | | | | | | | | | | | | | |
| | (A5) | 2.6 | | | | | | 10.0 | | | | | | | | | | | | | | | | | |
| | (A6) | 2.9 | | | | | | | 15.0 | | | | | | | | | | | | | | | | |
| | (A7) | 1.7 | | | | | | | | 15.0 | | | | | | | | | | | | | | | |
| | (A8) | 3.9 | | | | | | | | | 15.0 | | | | | | | | | | | | | | |
| | (A9) | 4.2 | | | | | | | | | | 20.0 | | | | | | | | | | | | | |
| | (A10) | 3.9 | | | | | | | | | | | 10.0 | | | | | | | | | | | | |
| | (A11) | 4.0 | | | | | | | | | | | | 10.0 | | | | | | | | | | | |
| | (A12) | 3.7 | | | | | | | | | | | | | 10.0 | | | | | | | | | | |
| (B) | Ethylene glycol | | 84.4 | 75.9 | 88.4 | 85.5 | | 85.8 | | 55.5 | 57.0 | 49.9 | 68.5 | 68.4 | 67.9 | 41.9 | 98.0 | 47.4 | 84.1 | 82.2 | 82.2 | 84.8 | 83.6 | 83.8 | 82.3 |
| | PEG200 | | | | | | 80.5 | | 79.9 | | | | | | | 41.9 | | | | | | | | | |
| | Polypropylene glycol | | | | | | | | | 23.8 | 24.4 | | | | | | | | | | | | | | |
| | PEG1000 | | | | | | | | | | | 12.5 | | | | | | | | | | | | | |
| | n-Decanol | | | | | | | | | | | | 7.6 | | | | | | | | | | | | |
| | 1,10-Decanediol | | | | | | | | | | | | | 7.6 | | | | | | | | | | | |
| | Glycerol | | | | | | | | | | | | | | 17.0 | | | | | | | | | | |
| Acid component (A') | (A'1) | 6.5 | | | | | | | | | | | | | | | | | | 10.0 | 5.0 | | | | |
| | (A'2) | 0.9 | | | | | | | | | | | | | | | | | | | | 10.0 | | | |
| | Acetylsalicylic acid | 4.7 | | | | | | | | | | | | | | | | | | | | | 10.0 | | |
| | Phthalic acid | 3.9 | | 5.0 | | | | | | | | | | | | | | | | | 5.0 | | | | 10.0 |
| | Trimellitic acid | 3.5 | | | | | 1.0 | | | | | | | | | | | | | | | | | | |
| | Pyromellitic acid | 2.8 | | | | | | | 1.0 | | | | | | | | | | | | | | | | |
| | 2,5-Furandicarboxylic acid | 3.4 | | | | | | | | | | | | | | | 0.5 | | | | | | | | |
| | Azelaic acid | 6.7 | | | | | | | | | | | | | | | | | 5.0 | | | | | 10.0 | |
| | Boric acid | 9.8 | | | | | | | | | | 0.1 | 0.1 | 0.1 | 0.1 | | | | | | | | | | |
| Counter cation | 1,2,3,4-Tetramethylimidazolinium /methyl carbonate | | | 10.4 | | | | | | | | | | | | | | | | | | | | | |
| | Ammonia | | | | 0.8 | | | | | | | | | | | | | | | | | | | | |
| | Diethylamine | | | | | | 2.7 | | | | | | | | | | | | | | | | | | |
| | Triethylamine | | 4.8 | | | 3.7 | | 3.4 | 3.3 | 5.0 | 2.8 | 1.8 | 3.3 | 3.1 | 4.2 | | 0.2 | 16.8 | 5.1 | 7.0 | 7.0 | 4.4 | 5.6 | 5.4 | 6.9 |
| | Ethylmorpholine | | | | | | | | | | | | | | | 5.5 | | | | | | | | | |
| Solvent | Sulfolane | | | | | | | | | | | 15.0 | 10.0 | 10.0 | | | | | | | | | | | |
| | Water | | 0.8 | 0.8 | 0.8 | 0.8 | 0.8 | 0.8 | 0.8 | 0.8 | 0.8 | 0.8 | 0.5 | 0.8 | 0.8 | 0.8 | 0.8 | 0.8 | 0.8 | 0.8 | 0.8 | 0.8 | 0.8 | 0.8 | 0.8 |
| Total weight | | | 100.0 | 102.1 | 100.0 | 100.0 | 100.0 | 100.0 | 100.0 | 100.0 | 100.0 | 100.0 | 100.0 | 100.0 | 100.0 | 100.0 | 100.0 | 100.0 | 100.0 | 100.0 | 100.0 | 100.0 | 100.0 | 100.0 | 100.0 |
| (B)/(A) | | | 8.4 | 7.6 | 8.8 | 0.9 | 5.4 | 8.6 | 5.3 | 5.3 | 5.4 | 3.1 | 7.6 | 7.6 | 8.5 | 8.4 | 195.9 | 1.4 | 16.8 | - | - | - | - | - | - |

The hybrid electrolytic capacitor electrolyte solutions obtained in Examples 1 to 17 and Comparative Examples 1 to 6 were evaluated for "spark voltage" before high-temperature testing (initial spark voltage) and "spark voltage" after high-temperature testing by the following method. Table 3 shows the results.

<Spark voltage evaluation method>

An anode foil (formed aluminum foil, available from Japan Capacitor Industrial Co., Ltd., 115HD-658Vf) having a dielectric layer with an area of 5 $cm^2$ on its surface and a cathode foil with an area of 5 $cm^2$ (plain aluminum foil) were disposed opposite to each other in a hybrid electrolytic capacitor electrolyte solution. A load was applied by a constant current method (2 mA) at 85°C using a constant voltage/constant current DC power supply (TAKASAGO, LTD., GP0650-05R), and the voltage was measured. Time was plotted on the horizontal axis, and voltage was plotted on the vertical axis, and the voltage rising curve over time was observed. The voltage at the point where the first distortion of the rising curve occurred due to spark or scintillation was determined as the spark voltage. A higher spark voltage indicates a higher withstand voltage.

<Method for evaluating spark voltage after high-temperature testing>

The hybrid electrolytic capacitor electrolyte solutions obtained in Examples 1 to 17 and Comparative Examples 1 to 6 were sealed in airtight vessels, and then left in a thermostatic chamber set at 125°C for 500 hours. Thereafter, the spark voltages of the hybrid electrolytic capacitor electrolyte solutions were evaluated by the above-mentioned method. In Comparative Example 3, the voltage did not increase in the evaluation of the spark voltage, and thus the spark voltage could not be measured.

[Table 3]

| | Hybrid electrolytic capacitor electrolyte solution | Spark voltage (V) (initial) | Spark voltage (V) (after high-temperature testing) |
|---|---|---|---|
| Example 1 | (Y-1) | 260 | 260 |
| Example 2 | (Y-2) | 180 | 175 |
| Example 3 | (Y-3) | 270 | 270 |
| Example 4 | (Y-4) | 190 | 190 |
| Example 5 | (Y-5) | 195 | 140 |
| Example 6 | (Y-6) | 160 | 160 |
| Example 7 | (Y-7) | 155 | 120 |
| Example 8 | (Y-8) | 120 | 115 |
| Example 9 | (Y-9) | 380 | 305 |
| Example 10 | (Y-10) | 460 | 385 |
| Example 11 | (Y-11) | 320 | 280 |
| Example 12 | (Y-12) | 335 | 295 |
| Example 13 | (Y-13) | 290 | 265 |
| Example 14 | (Y-14) | 260 | 270 |
| Example 15 | (Y-15) | 390 | 390 |
| Example 16 | (Y-16) | 150 | 145 |
| Example 17 | (Y-17) | 290 | 290 |
| Comparative Example 1 | (Y'-1) | 420 | 420 |
| Comparative Example 2 | (Y'-2) | 310 | 310 |
| Comparative Example 3 | (Y'-3) | - | - |
| Comparative Example 4 | (Y'-4) | 60 | 60 |
| Comparative Example 5 | (Y'-5) | 340 | 340 |
| Comparative Example 6 | (Y'-6) | 80 | 80 |

<Fabrication of hybrid electrolytic capacitor>

Electrode tabs were respectively connected to an anode foil (formed aluminum foil: 115HD-658Vf, available from Japan Capacitor Industrial Co., Ltd.) having a dielectric layer on its surface and a cathode foil (raw aluminum foil: 30CB, available from Japan Capacitor Industrial Co., Ltd.), and the electrodes were disposed opposite to each other with craft paper interposed therebetween as a separator. Thereby, an element was obtained. To reform the cut surfaces and defects, the element was subjected to reforming at a voltage of 500 V in an aqueous ammonium borate solution to obtain a capacitor element (theoretical capacity: 10.0 μF).

Next, the capacitor element was vacuum-impregnated (degree of vacuum: 20 mmHg) with a PEDOT/PSS aqueous dispersion (containing polystyrene sulfonic acid and a polymer having 3,4-ethylenedioxythiophene as a constituent monomer) (Clevios PH 500, available from Heraeus) for one minute and dried at 150°C for 30 minutes. Thereby, a solid electrolyte (C) layer was formed on the surface of the dielectric layer in the capacitor element.

Subsequently, the capacitor element including the solid electrolyte (C) layer on the surface of the dielectric layer was vacuum-impregnated (degree of vacuum: 20 mmHg) with each of the hybrid electrolytic capacitor electrolyte solutions obtained in Examples 1 to 17 and Comparative Examples 1 to 6 at 50°C for one minute.

Finally, the capacitor element including the solid electrolyte layer and impregnated with each of the hybrid electrolytic capacitor electrolyte solutions was contained in a case and crimped. A load was applied by a constant current method (2 mA) at 85°C using a constant voltage/constant current DC power supply (TAKASAGO, LTD., GP0650-05R), and aging was performed up to 35 V. Thereby, hybrid electrolytic capacitors were obtained.

The hybrid electrolytic capacitors were evaluated for "ESR" and "capacitance" before high-temperature testing (initial ESR and initial capacitance) and after high-temperature testing by the following method. The capacitance retention rate and the ESR retention rate after high-temperature testing were calculated by the following method. Table 4 shows the results. In Comparative Example 3, rupture occurred during aging. Thus, a hybrid electrolytic capacitor could not be fabricated, and neither the ESR nor the capacitance could be measured.

<Method for evaluating ESR>

The ESR value of each of the hybrid electrolytic capacitors at 100 kHz was measured using an LCR meter (LCR HiTester 3532-50, available from Hioki E.E. Corporation).

The lower the ESR value is, the more stable the operation of the capacitor is.

<Method for evaluating capacitance>

The capacitance of each of the hybrid electrolytic capacitors at 120 kHz was measured using an LCR meter (LCR HiTester 3532-50, available from Hioki E.E. Corporation).

<Evaluation of ESR and capacitance after high-temperature testing>

Each of the hybrid electrolytic capacitors was left in a thermostatic chamber set at 125°C for 500 hours. Thereafter, the ESR and capacitance of the hybrid electrolytic capacitors were evaluated by the above-mentioned method.

<Calculation methods of capacitance retention rate and ESR retention rate>

The capacitance retention rate and the ESR retention rate were calculated by the following formulas.

Capacitance retention rate (%) = (Capacitance after high-temperature testing) × 100/(Initial capacitance)

ESR retention rate (%) = (ESR value after high-temperature testing) × 100/(Initial ESR value)

[Table 4]

| | Hybrid electrolytic capacitor electrolyte solution | Capacitance (μF) (initial) | Capacitance (μF) (after high-temperature testing) | Capacitance retention rate (%) | ESR (mΩ) (initial) | ESR (mΩ) (after high-temperature testing) | ESR retention rate (%) |
|---|---|---|---|---|---|---|---|
| Example 1 | (Y-1) | 8.9 | 8.3 | 93.3 | 34 | 42 | 123.5 |
| Example 2 | (Y-2) | 9.3 | 8.7 | 93.5 | 31 | 36 | 116.1 |
| Example 3 | (Y-3) | 8.8 | 8.1 | 92.0 | 35 | 48 | 137.1 |
| Example 4 | (Y-4) | 9.0 | 8.8 | 97.8 | 31 | 34 | 109.7 |
| Example 5 | (Y-5) | 8.3 | 8.1 | 97.6 | 41 | 47 | 114.6 |
| Example 6 | (Y-6) | 8.9 | 8.7 | 97.8 | 32 | 35 | 109.4 |
| Example 7 | (Y-7) | 8.2 | 8.0 | 97.6 | 43 | 48 | 111.6 |
| Example 8 | (Y-8) | 8.2 | 7.9 | 96.3 | 30 | 32 | 106.7 |
| Example 9 | (Y-9) | 8.3 | 7.6 | 91.6 | 42 | 52 | 123.8 |
| Example 10 | (Y-10) | 8.2 | 7.5 | 91.5 | 44 | 60 | 136.4 |
| Example 11 | (Y-11) | 8.5 | 7.9 | 92.9 | 41 | 53 | 129.3 |
| Example 12 | (Y-12) | 8.6 | 7.9 | 91.9 | 42 | 54 | 128.6 |
| Example 13 | (Y-13) | 8.6 | 8.0 | 93.0 | 39 | 47 | 120.5 |
| Example 14 | (Y-14) | 8.3 | 7.7 | 92.8 | 38 | 48 | 126.3 |
| Example 15 | (Y-15) | 9.5 | 9.2 | 96.8 | 45 | 48 | 106.7 |
| Example 16 | (Y-16) | 8.4 | 7.7 | 91.7 | 41 | 54 | 131.7 |
| Example 17 | (Y-17) | 8.9 | 8.1 | 91.0 | 36 | 50 | 138.9 |
| Comparative Example 1 | (Y'-1) | 8.9 | 7.4 | 83.1 | 36 | 68 | 188.9 |
| Comparative Example 2 | (Y'-2) | 8.9 | 7.6 | 85.4 | 35 | 62 | 177.1 |
| Comparative Example 3 | (Y'-3) | - | - | - | - | - | - |
| Comparative Example 4 | (Y'-4) | 9.1 | 7.7 | 84.6 | 34 | 64 | 188.2 |
| Comparative Example 5 | (Y'-5) | 9.3 | 7.7 | 82.8 | 35 | 65 | 185.7 |
| Comparative Example 6 | (Y'-6) | 9.5 | 8.9 | 93.7 | 31 | 35 | 112.9 |

The hybrid electrolytic capacitor electrolyte solutions of Examples 1 to 17 exhibited both high initial withstand voltage and high withstand voltage after high-temperature testing. In addition, the hybrid electrolytic capacitors including the hybrid electrolytic capacitor electrolyte solutions of Examples 1 to 17 had good initial characteristics (capacitance and ESR), and also retained good capacitance and ESR after high-temperature testing.

On the other hand, in Comparative Examples 1 and 2 in which the carboxylic acid (A) was not contained and the carboxylic acid (A'1) with a pKa of more than 4.5 was used, the effect of suppressing the oxidation degradation of the conductive polymer was insufficient, and the capacitance and ESR of the hybrid electrolytic capacitors after high-temperature testing significantly deteriorated. In Comparative Example 3 in which the carboxylic acid (A) was not contained and the ester (A'2) with a pKa of less than 1.0 was used, the anodic oxide film could not be reformed, the voltage could not be increased in the evaluation of the spark voltage, and rupture occurred during aging. Thus, a hybrid electrolytic capacitor could not be fabricated. In Comparative Examples 4 and 5 in which the carboxylic acid (A) was not contained and acetylsalicylic acid (pKa = 4.7) or azelaic acid (pKa = 6.7) having a pKa of more than 4.5 was used, the effect

of suppressing the oxidative degradation of the conductive polymer was insufficient, and the capacitance and ESR after high-temperature testing significantly deteriorated. In Comparative Example 6 in which the carboxylic acid (A) was not contained and phthalic acid was used, the spark voltage (withstand voltage) was insufficient.

INDUSTRIAL APPLICABILITY

The hybrid electrolytic capacitor including the hybrid electrolytic capacitor electrolyte solution of the present invention suppresses an increase in ESR in a high-temperature environment, and is therefore suitable for use in components for electrical products and electronic products adapted to high currents.

The hybrid electrolytic capacitor electrolyte solution of the present invention is suitable for mobile applications such as laptop computers, which are susceptible to ambient temperature and tend to become hot during operation, particularly for in-vehicle applications.

## Claims

1. A hybrid electrolytic capacitor electrolyte solution comprising an aromatic carboxylic acid (A) having a substituent with two or more carbon atoms,

    the carboxylic acid (A) having an acid dissociation constant (pKa) of 1.0 to 4.5 as determined by the following measurement method:
    Measurement method
    at 25°C, a 0.1 mol/L methanolic potassium hydroxide solution is added dropwise to a solution consisting of 1 part by weight of the carboxylic acid (A) and 99 parts by weight of methanol to obtain a titration curve having inflection points; among the inflection points, an inflection point at which an amount of titrant added is the smallest is defined as an equivalence point; and a pH at half the amount of titrant added at the equivalence point is defined as the acid dissociation constant (pKa) of the carboxylic acid (A).

2. The hybrid electrolytic capacitor electrolyte solution according to claim 1,
wherein the carboxylic acid (A) has at least one bond selected from the group consisting of an ester bond, an amide bond, an imide bond, an ether bond, a urethane bond, and a urea bond.

3. The hybrid electrolytic capacitor electrolyte solution according to claim 1,
wherein the carboxylic acid (A) has an ester bond.

4. The hybrid electrolytic capacitor electrolyte solution according to claim 1,
wherein the carboxylic acid (A) is contained in an amount of 50 to 100% by weight based on a total weight of acid components in the solution.

5. The hybrid electrolytic capacitor electrolyte solution according to claim 1, further comprising an alcohol (B),
wherein a weight ratio ((B)/(A)) of the alcohol (B) to the carboxylic acid (A) is 1 to 200.

6. The hybrid electrolytic capacitor electrolyte solution according to claim 1,
wherein the carboxylic acid (A) comprises a carboxylic acid represented by the following formula (1):

[Chem. 1]

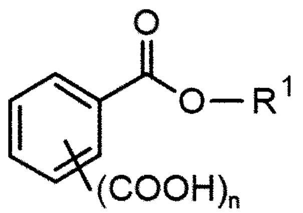

(1)

wherein $R^1$ represents a residue obtained by removing a hydroxy group from an optionally substituted C2-C10

monoalcohol, a residue obtained by removing one hydroxy group from a C2-C10 alkylene glycol, a residue obtained by removing one hydroxy group from a polyalkylene glycol having a C2-C6 oxyalkylene unit, or a residue obtained by removing one hydroxy group from glycerol; and n represents an integer of 1 to 5.

**7.** A hybrid electrolytic capacitor comprising a capacitor element,

the capacitor element comprising an anode foil, a dielectric layer on a surface of the anode foil, and a solid electrolyte (C) layer in contact with the dielectric layer,
the capacitor element being impregnated with the hybrid electrolytic capacitor electrolyte solution according to any one of claims 1 to 6,
the solid electrolyte (C) layer containing a conductive polymer.

**INTERNATIONAL SEARCH REPORT**

International application No.
**PCT/JP2024/008705**

**A. CLASSIFICATION OF SUBJECT MATTER**

***H01G 9/035***(2006.01)i; ***H01G 9/15***(2006.01)i; ***H01G 9/145***(2006.01)i
FI: H01G9/035; H01G9/15; H01G9/145

According to International Patent Classification (IPC) or to both national classification and IPC

**B. FIELDS SEARCHED**

Minimum documentation searched (classification system followed by classification symbols)

H01G9/035; H01G9/028; H01G9/15; H01G9/145

Documentation searched other than minimum documentation to the extent that such documents are included in the fields searched

Published examined utility model applications of Japan 1922-1996
Published unexamined utility model applications of Japan 1971-2024
Registered utility model specifications of Japan 1996-2024
Published registered utility model applications of Japan 1994-2024

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
|---|---|---|
| Y | WO 2022/044636 A1 (PANASONIC INTELLECTUAL PROPERTY MANAGEMENT CO., LTD.) 03 March 2022 (2022-03-03) paragraphs [0140]-[0152], fig. 1, 2 | 1-7 |
| Y | JP 52-1103 B2 (NICHICON CAPACITOR LTD.) 12 January 1977 (1977-01-12) p. 1, right column, line 8 to p. 2 (table 4) | 1-7 |
| A | JP 2019-68005 A (NIPPON CHEMI-CON CORPORATION) 02 April 2019 (2019-04-02) paragraphs [0019], [0051]-[0057] | 1-7 |
| A | JP 2007-42788 A (HITACHI AIC, INC.) 15 February 2007 (2007-02-15) paragraph [0008] | 1-7 |

☐ Further documents are listed in the continuation of Box C. ☑ See patent family annex.

* Special categories of cited documents:
"A" document defining the general state of the art which is not considered to be of particular relevance
"D" document cited by the applicant in the international application
"E" earlier application or patent but published on or after the international filing date
"L" document which may throw doubts on priority claim(s) or which is cited to establish the publication date of another citation or other special reason (as specified)
"O" document referring to an oral disclosure, use, exhibition or other means
"P" document published prior to the international filing date but later than the priority date claimed
"T" later document published after the international filing date or priority date and not in conflict with the application but cited to understand the principle or theory underlying the invention
"X" document of particular relevance; the claimed invention cannot be considered novel or cannot be considered to involve an inventive step when the document is taken alone
"Y" document of particular relevance; the claimed invention cannot be considered to involve an inventive step when the document is combined with one or more other such documents, such combination being obvious to a person skilled in the art
"&" document member of the same patent family

| Date of the actual completion of the international search | Date of mailing of the international search report |
|---|---|
| **02 May 2024** | **21 May 2024** |

| Name and mailing address of the ISA/JP | Authorized officer |
|---|---|
| **Japan Patent Office (ISA/JP)**<br>**3-4-3 Kasumigaseki, Chiyoda-ku, Tokyo 100-8915**<br>**Japan** | Telephone No. |

Form PCT/ISA/210 (second sheet) (July 2022)

**INTERNATIONAL SEARCH REPORT**
**Information on patent family members**

International application No.
**PCT/JP2024/008705**

| Patent document cited in search report | Publication date (day/month/year) | Patent family member(s) | Publication date (day/month/year) |
|---|---|---|---|
| WO 2022/044636 A1 | 03 March 2022 | (Family: none) | |
| JP 52-1103 B2 | 12 January 1977 | (Family: none) | |
| JP 2019-68005 A | 02 April 2019 | (Family: none) | |
| JP 2007-42788 A | 15 February 2007 | (Family: none) | |

Form PCT/ISA/210 (patent family annex) (July 2022)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- JP 2015165550 A
- JP 2017038010 A